# EUROPÄISCHE PATENTSCHRIFT

(11) **EP 0 990 548 B1**
(45) Veröffentlichungstag und Bekanntmachung des Hinweises auf die Patenterteilung: **03.11.2004**
(21) Anmeldenummer: 99115156.4
(22) Anmeldetag: 12.08.1999
(51) Int. Cl.: B60K 15/05

(54) **Tankklappeneinheit**
Tank inlet cover assembly
Système de trappe d'essence

(30) Priorität: 30.09.1998 DE 19845088
(43) Veröffentlichungstag der Anmeldung: 05.04.2000
(73) Patentinhaber: Volkswagen Aktiengesellschaft, 38436 Wolfsburg (DE)
(72) Erfinder: Gödecke, Ralf, 29386 Hankensbüttel (DE); Welsch, Frank, Dr., 38179 Schwülper (DE)

(56) Entgegenhaltungen:
- EP-A- 0 342 679
- EP-A- 0 582 025
- DE-A- 19 612 098
- FR-A- 2 731 391

## Beschreibung

Die Erfindung betrifft eine Tankklappeneinheit zum Einbau in ein Kraftfahrzeug, das einen durch einen Tankdeckel verschließbaren Kraftstoffeinfüllstutzen aufweist, wobei die Einheit einen Muldenkörper mit einer Durchtrittsöffnung für den Einfüllstutzen und eine schwenkbar am Muldenkörper angebrachte Tankklappe umfaßt, auf die ein Stellmotor einwirkt.

Eine als Modul ausgebildete Tankklappeneinheit der eingangs genannten Art ist unter anderem in der EP 0 736 406 A1 der Anmelderin offenbart. Bei der bekannten Tankklappeneinheit mit fernbetätigter Verriegelungseinrichtung wird der Stellmotor getrennt vom Tankklappenmodul am Fahrzeugaufbau befestigt, zum Beispiel in Fahrtrichtung hinter dem Einfüllstutzen an der Radhauswand, und wirkt über eine hin- und herbewegliche Entriegelungsstange auf die geschlossene Tankklappe ein, um diese fernbetätigt zu entriegeln, so daß sie zum Betanken des Fahrzeugs von Hand geöffnet und nach dem Betanken wieder geschlossen werden kann. Die bekannte Tankklappeneinheit bedingt jedoch einen verhältnismäßig hohen Zeit- und Arbeitsaufwand bei der Endmontage, da der Stellmotor getrennt montiert und die Entriegelungsstange durch eine Öffnung in der Radhauswand hindurch in Wirkeingriff mit dem Muldenkörper des Tankklappenmoduls gebracht werden muß.

Aus der EP 0 582 025 B1 ist es bei einem Tankverschlusssystem für einen Kraftstoffbehälter eines Kraftfahrzeugs bereits an sich bekannt, eine die Tankmulde verschließende Tankklappe mit Hilfe eines Antriebsmotors zu verschwenken, der in den Figuren 1 und 2 dieser Druckschrift unmittelbar an eine Begrenzungswand der Tankmulde angrenzend eingezeichnet ist. Die Tankklappe ist dort jedoch mit dem Tankdeckel zu einer Einheit kombiniert, so daß beim Öffnen der Tankklappe gleichzeitig auch der Kraftstoffeinfüllstutzen geöffnet wird. Diese Konstruktion eignet sich nicht für Kraftfahrzeuge, bei denen der Tankdeckel und die Tankklappe aus Sicherheitsgründen getrennt ausgebildet sind, so daß ein versehentliches und vom Fahrer nicht bemerktes Öffnen der Tankklappe nicht zu einem Austritt von Kraftstoff aus dem Kraftstoffbehälter führen kann.

Entsprechendes gilt auch für die in der EP 0 582 025 B1, der EP 0 704 331 A1 und der DE 44 22 557 C1 vorgeschlagenen Tankverschlusssysteme, bei denen neben einem den Kraftstoffeinfüllstutzen verschließenden Tankdeckel auch eine die Tankmulde verschließende Tankklappe vorgesehen ist, die jedoch zusammen mit dem Tankdeckel geöffnet und geschlossen wird. Eine Tankklappeneinheit mit den Merkmalen des Oberbegriffs ist bekannt aus EP 0 342 679 A1.

Ausgehend hiervon liegt der Erfindung die Aufgabe zugrunde, bei einer Tankklappeneinheit der eingangs genannten Art ohne eine Beeinträchtigung der Fahrzeugsicherheit und ohne eine wesentliche Vergrößerung der Anzahl der Bauteile und damit der Kosten den Zeit- und Arbeitsaufwand für die Endmontage zu verringern und gleichzeitig den Benutzerkomfort zu verbessern.

Diese Aufgabe wird erfindungsgemäß dadurch gelöst, daß der Stellmotor einen Teil der vormontierten Tankklappeneinheit bildet, so daß der Zeit- und Arbeitsaufwand bei der Endmontage verringert wird, und daß der Stellmotor nach dem Einbau der Tankklappeneinheit die Tankklappe zum Öffnen und Schließen derselben vom Tankdeckel weg bzw. auf den Tankdeckel zu verschwenkt, wodurch der Benutzerkomfort im Vergleich zur Entriegelung und zum manuellen Öffnen bei der eingangs genannten Tankklappeneinheit verbessert wird, ohne die Fahrzeugsicherheit zu beeinträchtigen, da der Tankdeckel beim Öffnen der Tankklappe geschlossen bleibt. Eine radhausunabhängige Montage des Stellmotors hat weiter den Vorteil, daß unabhängig vom Fahrzeugtyp und dessen Abmessungen stets derselbe Stellmotor verwendet werden kann. Außerdem entfallen Haltewinkel oder ähnliche Bauteile zur Befestigung des Stellmotors.

Der Stellmotor ist zweckmäßig ein vom Bordnetz des Kraftfahrzeugs gespeister Gleichstrom-Elektromotor, der beim Einsetzen der Tankklappeneinheit in eine Aufnahmeöffnung im Karosserieblech an das Bordnetz angeschlossen wird, wobei der Muldenkörper der Tankklappeneinheit gemäß einer bevorzugten Ausgestaltung der Erfindung auf seiner von der Tankmulde abgewandten Rückseite mit einem Buchsen- oder Steckerteil eines Steckverbinders versehen ist, dessen Position so gewählt ist, daß es beim Einführen oder Festschrauben des Muldenkörpers von selbst mit einem in der Öffnung angebrachten komplementären Stecker- oder Buchsenteil des Steckverbinders in Eingriff tritt.

Eine weitere bevorzugte Ausgestaltung der Erfindung sieht vor, daß der Stellmotor und/oder weitere elektrische Bauteile, in denen eine Funkenbildung nicht ausgeschlossen werden kann, auf der von der Tankmulde abgewandten Rückseite des Muldenkörpers der Tankklappeneinheit angeordnet sind, und daß der Muldenkörper gegenüber dem Rand der Aufnahmeöffnung und gegenüber dem Einfüllstutzen abgedichtet ist. Alternativ oder zusätzlich können die zum Ein- und Ausschalten des Stellmotors auf der Tankklappeneinheit vorgesehenen Schalter ganz oder teilweise gekapselt sein, zumindest soweit sie auf der Vorderseite des Muldenkörpers angeordnet und damit für Kraftstoffdämpfe aus dem Einfüllstutzen zugänglich sind.

Die zum Öffnen und Schließen der Tankklappe im Stromkreis zwischen dem Bordnetz und dem Stellmotor vorgesehenen Schalter umfassen vorzugsweise einen im Fahrzeuginneren in der Nähe des Fahrersitzes angeordneten ersten Schalter, bei dessen Betätigung dem Stellmotor Strom zugeführt wird, um aus dem Wageninneren heraus die geschlossene Tankklappe zu öffnen oder die geöffnete Tankklappe zu schließen, einen in der Nähe des Schwenkgelenks innerhalb oder am Rand der Tankmulde auf dem Muldenkörper angeordneten zweiten Schalter, der bei geöffneter Tankklappe von einem Schwenkarm der Tankklappe betätigt wird und die Stromzufuhr zum Stellmotor unterbricht, sowie einen in der Tankmulde auf dem Muldenkörper angeordneten dritten Schalter, der bei geöffneter Türe durch Fingerdruck betätigt werden kann, um dem Stellmotor zum Schließen der Tankklappe Strom zuzuführen, und/oder genutzt werden kann, um die Stromzufuhr nach dem Schließen der Tankklappe selbsttätig zu unterbrechen.

Gemäß einer weiteren vorteilhaften Ausgestaltung können der zweite bzw. dritte Schalter so ausgebildet sein, daß sie durch einen leichten Druck mit der Hand auf die geöffnete bzw. geschlossene Tankklappe betätigt werden, um dem Stellmotor zum Schließen bzw. zum Öffnen der Tankklappe Strom zuzuführen.

Der zweite und/oder dritte Schalter können gegebenenfalls auch in den Stellmotor integriert werden, um durch die Anordnung der gesamten Elektronik in einem Bereich einen geringeren Aufwand für die Verkabelung zu erreichen, wobei die Betätigung der Schalter zum Beispiel durch eine translatorische Verschiebung der Abtriebsachse des Motors oder des Motors selbst erfolgen kann, wenn die Tankklappe ihre jeweilige Endstellung erreicht. Mit einer solchen Anordnung lässt sich außerdem wirkungsvoll ein Einklemmschutz erzielen. Die Richtung der Schwenkbewegung der Tankklappe wird vorzugsweise durch Umkehr der Stromrichtung des zum Stellmotor zugeführten Gleichstroms geändert.

Der Stellmotor ist aus Platzgründen zweckmäßig in der Nähe eines Schwenkgelenks der Tankklappe angeordnet, das einen an der Innenseite der Tankklappe angebrachten Schwenkarm um eine vertikale Drehachse schwenkbar mit dem Muldenkörper verbindet. Vorzugsweise ist der Stellmotor am Muldenkörper angebracht, wobei seine Abtriebswelle die Schnecke eines Schneckengetriebes tragen kann, deren Schneckenrad dann koaxial zur Drehachse auf dem Schwenkarm befestigt oder angeformt ist. Alternativ können zur Untersetzung der Drehzahl des Stellmotors auch ein mehrstufiges Zahnradgetriebe, ein Viergelenkgetriebe in Verbindung mit einem weiteren im Schwenkarm der Tankklappe angeordneten Schwenkgelenk, sowie andere Getriebe oder Kombinationen derartiger Getriebe vorgesehen werden.

Im folgenden wird die Erfindung anhand eines in der Zeichnung dargestellten Ausführungsbeispiels näher erläutert. Es zeigen:
Fig. 1: eine auseinandergezogene perspektivische Ansicht einer als Modul ausgebildeten erfindungsgemäßen Tankklappeneinheit vor dem Einsetzen in eine Tankmulde eines Personenkraftwagens;
Fig. 2: eine Schnittansicht entlang der Linie II - II der Fig. 1 nach dem Einsetzen des Moduls und bei geschlossener Tankklappe;
Fig. 3: eine teilweise auseinandergezogene perspektivische Ansicht eines auf dem Modul angebrachten Stellmotors mit Schneckengetriebe zum Verschwenken der Tankklappe.

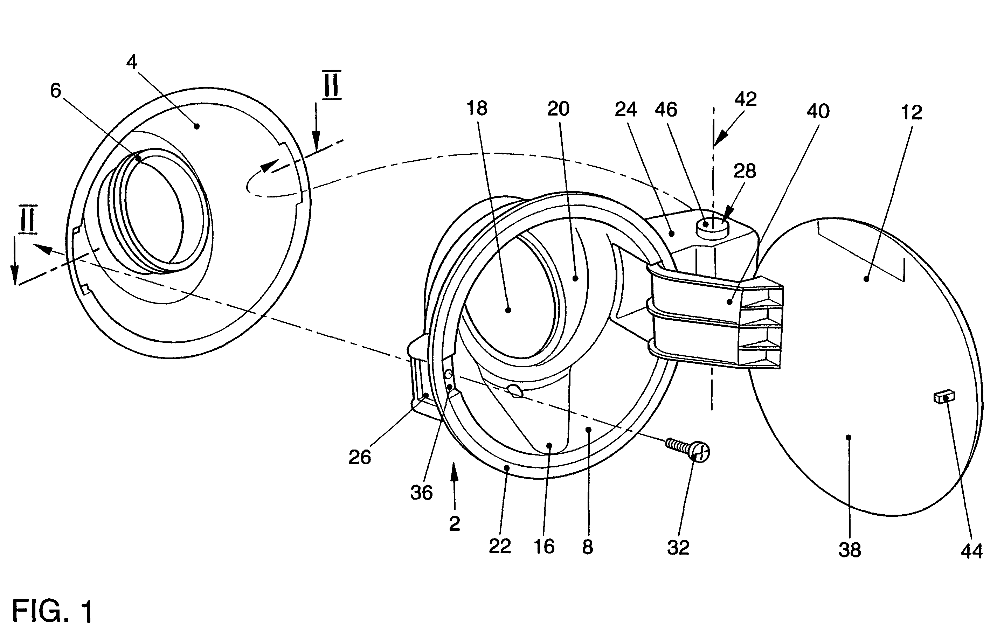

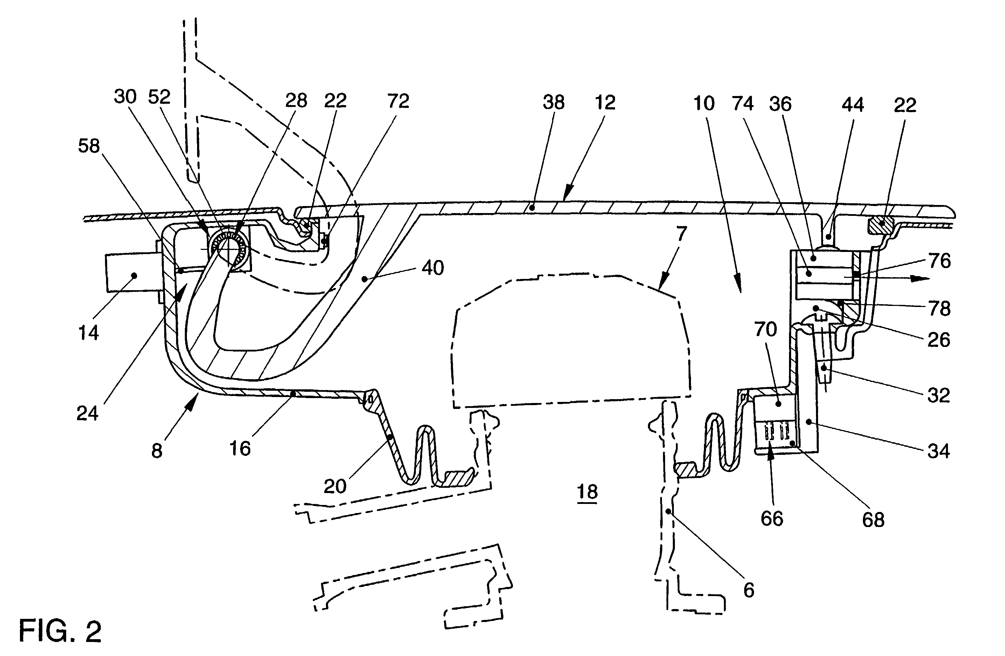

Das in Fig. 1 der Zeichnung auf der rechten Seite dargestellte erfindungsgemäße Tankklappenmodul 2 für einen Pkw wird bei dessen Endmontage von außen her in eine Öffnung 4 eingesetzt, die um einen Einfüllstutzen 6 eines Kraftstoffbehälters herum im Karosserieblech des Pkw ausgespart ist. Der Einfüllstutzen 6 ist mit einem aufgeschraubten Tankdeckel 7 (Fig. 2) versehen, der durch ein Schloß gesichert sein kann.

Das Tankklappenmodul 2 besteht im wesentlichen aus einem napfförmigen Muldenkörper 8, der eine den Einfüllstutzen 6 umgebende Tankmulde 10 nach innen zu begrenzt, einer am Muldenkörper 8 angelenkten schwenkbaren Tankklappe 12, sowie einem Stellmotor 14 (in Fig. 1 nicht sichtbar) zum Öffnen und Schließen der Tankklappe 12.

Wie am besten in Fig. 1 und 2 dargestellt, besteht der Muldenkörper 8 im wesentlichen aus einem durch Spritzgießen aus Hartkunststoff hergestellten äußeren Topfteil 16 und einer am Topfteil 16 angeformten, mit einer Durchtrittsöffnung 18 für den Einfüllstutzen 6 versehenen elastisch verformbaren Bodenschürze 20, die nach dem Einbau des Muldenkörpers 8 dichtend gegen die äußere Umfangsfläche des Einfüllstutzens 6 anliegt. Ein um die Tankmulde 10 umlaufender freier Rand des Muldenkörpers 8 trägt eine bei geschlossener Tankklappe 12 gegen deren Innenseite anliegende Gummidichtung 22, die auch dazu dient, das Schließgeräusch beim Schließen der Tankklappe 12 zu mindern.

Der Muldenkörper 8 ist an zwei diametral entgegengesetzten Seiten jeweils mit einer Erweiterung 24, 26 versehen, die sich nach dem Einbau des Tankklappenmoduls 2 im wesentlichen horizontal gegenüberliegen. Die in Fahrtrichtung vordere Erweiterung 24 beherbergt ein Schwenklager 28 für die Tankklappe 12 und ein zum Verschwenken der Tankklappe 12 vom Stellmotor 14 angetriebenes Schneckengetriebe 30, während die in Fahrtrichtung hintere Erweiterung 26 mit einer Bohrung versehen ist, in die nach dem Einsetzen des Muldenkörpers 8 in die Karosserieöffnung 4 eine Befestigungsschraube 32 eingeschraubt werden kann, um den Muldenkörper 8 lösbar an einem karosseriefesten Montageteil 34 zu befestigen. Die Erweiterung 26 beherbergt zudem einen Schalter 36 für den Stellmotor 14, der in Bezug zum Muldenkörper 8 in radialer Richtung verschiebbar in die Erweiterung 26 eingesetzt ist.

Die einstückig aus Kunststoff ausgebildete Tankklappe 12 besteht im wesentlichen aus einem Klappenkörper 38, der einen kreisförmigem, an den Umriß der Karosserieöffnung 4 angepaßten Umriß und eine an die Kontur des Karosserieblechs in der Umgebung der Öffnung 4 angepaßte Außenkontur aufweist, einem in der Nähe der Erweiterung 24 nach innen über den Klappenkörper 38 überstehend angeformten Schwenkarm 40, dessen freies Ende im Schwenklager 28 um eine vertikale Drehachse 42 drehbar gelagert ist, sowie einem im Bereich der Erweiterung 26 über die Innenseite des Klappenkörpers 38 überstehenden Vorsprung 44 zur Betätigung des Schalters 36.

Das Schwenklager 28 besteht im wesentlichen aus zwei auf der Ober- und Unterseite der Erweiterung 24 angeformten Fortsätzen 46, die jeweils eine zur Innenseite der Erweiterung 24 hin offene zylindrische Lagerbuchse 48 begrenzen, in welche ein nach oben bzw. nach unten über das Ende des Schwenkarms 40 überstehender Lagerzapfen 50 eingreift.

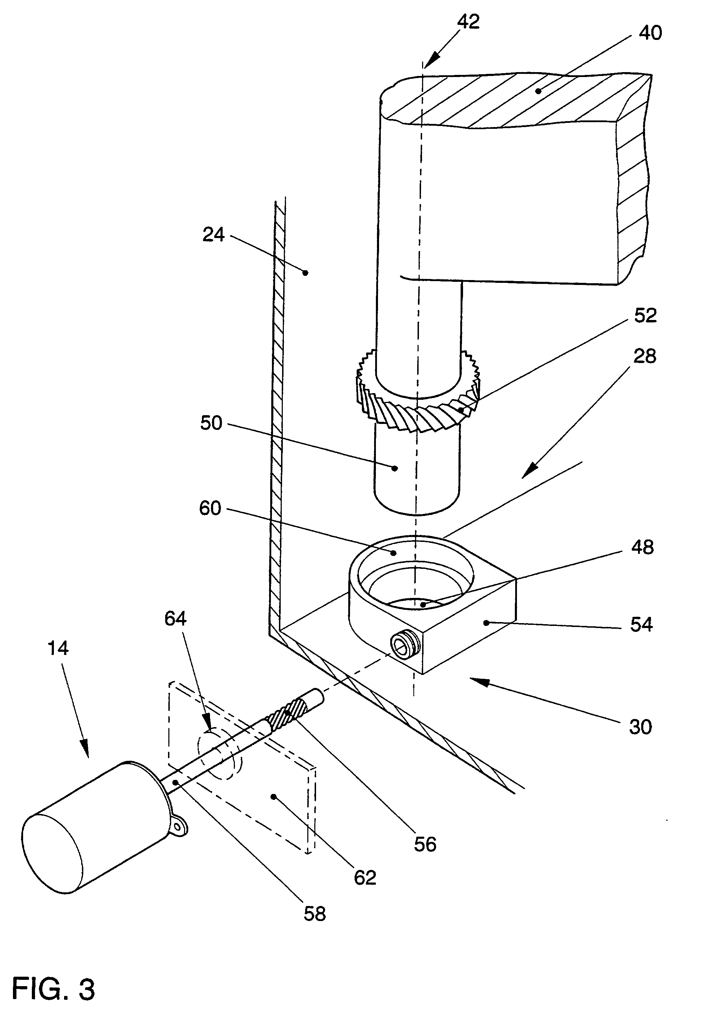

Wie am besten in Fig. 3 dargestellt, ist das Schneckengetriebe 30 oberhalb der unteren Lagerbuchse 48 bzw. des unteren Lagerzapfens 50 angeordnet, wobei es ein einstückig mit dem Lagerzapfen 50 ausgebildetes und radial über diesen überstehendes Schneckenrad 52 und eine oberhalb der Lagerbuchse 48 in einem Getriebegehäuse 54 gelagerte Schnecke 56 umfaßt, die an dem in das Getriebegehäuse 54 ragenden Ende einer Abtriebswelle 58 des Stellmotors 14 ausgebildet ist. Das Getriebegehäuse 54 ist oberhalb der Lagerbuchse 48 auf dem Boden der Erweiterung 24 befestigt und weist eine zur Lagerbuchse 48 koaxiale Ausnehmung 60 für das Schneckenrad 52 auf, in welche die Schnecke 56 tangential eingreift. Alternativ könnte das Schneckengetriebe 30 auch oberhalb des Schwenkarms 40 angeordnet sein.

Das Schneckengetriebe 30 wirkt selbstsperrend, so daß die geschlossene Tankklappe 12 durch Aufbringen einer Zugkraft von außen nicht geöffnet werden kann. Falls gewünscht, kann jedoch eine zusätzliche Verriegelung in an sich bekannter Weise vorgesehen werden, zum Beispiel mittels eines Sperrstifts mit elektrischer oder mechanischer Entriegelung.

Der Stellmotor 14 ist auf der vom Inneren der Tankmulde 10 und vom Einfüllstutzen 6 abgewandten Außenseite des Muldenkörpers 8 angeschraubt, wobei seine Abtriebswelle 58 eine mit einer Ringdichtung 62 versehene Durchtrittsöffnung 64 in der Wand der Erweiterung 24 durchsetzt. Der Stellmotor 14 ist ebenso wie die Schließkontakte der nachfolgend beschriebenen, zum Ein- und Ausschalten des Stellmotors 14 dienenden und im Bereich der Tankmulde 10 auf dem Muldenkörper 8 angeordneten Schalter gekapselt ausgebildet, um insbesondere bei Personenkraftwagen mit leichtflüchtigen Kraftstoffen im Kraftstoffbehälter die Gefahr von Kraftstoffverpuffungen infolge einer Bildung elektrischer Funken zu minimieren.

Die Stromzufuhr aus dem Bordnetz des Pkw zum Stellmotor 14 erfolgt über einen Steckverbinder 66 (Fig. 2), bestehend aus einem auf dem Montageteil 34 befestigten Buchsenteil 68 und einem angrenzend an die Erweiterung 26 auf der Außenseite des Muldenkörpers 8 befestigten Steckerteil 70, die so angeordnet sind, daß sie beim Einsetzen des Tankklappenmoduls 2 in die Öffnung 4 selbsttätig miteinander in Eingriff treten.

Der Stromkreis für den Stellmotor 14 enthält weiter mehrere Schalter, von denen ein erster (nicht dargestellt) als Tastschalter ausgebildet und in der Nähe des Fahrersitzes des Pkw angeordnet ist, wobei dieser Schalter dazu dient, vom Fahrersitz aus die geschlossene Tankklappe 12 durch Stromzufuhr zum Stellmotor 14 zu öffnen und ggf. die geöffnete Tankklappe 12 wieder zu schließen.

Ein zweiter, als Mikroschalter ausgebildeter Schalter 72 ist in der Nähe der Dichtung 22 am Rand des Muldenkörpers 8 dem Schwenkarm 40 gegenüberliegend angebracht und wird bei vollständig geöffneter Tankklappe 12 (in Fig. 2 in unterbrochenen Linien teilweise dargestellt) vom Schwenkarm 40 betätigt, so daß die Stromzufuhr zum Stellmotor 14 unterbrochen und damit ein weiteres Aufschwenken der Tankklappe 12 verhindert wird. Die Schließkontakte des Schalters 72 sind vorzugsweise auf der Außenseite des Muldenkörpers 8 angeordnet. Alternativ kann der Schalter 72 in den Stellmotor 14 integriert sein, wobei er zum Beispiel durch eine translatorische Verschiebung der Abtriebswelle 58 betätigt wird, wenn die Tankklappe 12 oder der Schwenkarm 40 gegen einen Endanschlag anschlagen.

Der in der Erweiterung 26 angeordnete dritte Schalter 36 dient dazu, nach dem Betanken des Pkw und nach dem Verschließen des Tankdeckels 7 die Tankklappe 12 noch vor dem Einsteigen in den Pkw durch Stromzufuhr zum Stellmotor 14 zu schließen, wobei die Betätigung des Schalters 36 durch Fingerdruck auf einen nach außen weisenden Betätigungsknopf erfolgt. Nach der Betätigung des Schalters 36 wird die offene Tankklappe 12 in Richtung des Tankdeckels 7 verschwenkt, bis sie ihre in Fig. 2 dargestellte Schließstellung einnimmt. In dieser Stellung wird der Betätigungsknopf des Schalters 36 durch den Vorsprung 44 auf der Innenseite der Tankklappe 12 erneut betätigt und dadurch die Stromzufuhr zum Stellmotor 14 wieder unterbrochen.

Der Schalter 36 ist in radialer Richtung beweglich in die Erweiterung 26 eingesetzt, so daß er nach dem Einführen des Muldenkörpers 8 in die Karosserieöffnung 4 aus seiner in Fig. 2 dargestellten Stellung in Richtung des Pfeils A in Bezug zum Muldenkörper 8 radial nach außen verschoben werden kann, um das Einschrauben der Befestigungsschraube 32 in die Bohrung des Montageteils 34 zu ermöglichen. Anschließend wird der Schalter 36 wieder in die in Fig. 2 dargestellte Stellung zurückbewegt, in der zwei als Verschiebeführung dienende und über entgegengesetzte Seiten des Schalters 36 überstehende Schwalbenschwanzrippen 74 gegen innere Anschläge in zwei zur Aufnahme der Rippen 74 dienenden Schwalbenschwanznuten 76 anschlagen und eine auf der Unterseite des Schalters 36 angeordnete Rastnase 78 für eine Arretierung des Schalter 36 über dem Kopf der Befestigungsschraube 32 sorgt (Fig. 2).

Um zu vermeiden, daß der Fahrer bei einem Halt an einer Tankstelle zur Betätigung des in der Nähe des Fahrersitzes angeordneten Schalters wieder in den Pkw einsteigen muß, wenn er den in Sitznähe angeordneten Schalter vor dem Aussteigen versehentlich nicht betätigt hat, kann der Schalter 36 zudem so ausgebildet sein, daß ein leichter Druck mit der Hand von außen auf die geschlossene Tankklappe 12 ebenfalls eine Betätigung des Schalters 36 bewirkt, die eine Stromzufuhr zum Stellmotor 14 und damit ein Öffnen der Tankklappe 12 zur Folge hat. In diesem Fall wird der Schalter 36 zweckmäßig in den Stellmotor 14 integriert (nicht dargestellt), wobei er durch eine translatorische Verschiebung der Abtriebswelle 58 oder des gesamten Stellmotors 14 betätigt werden kann. Der Schalter 36 dient dann gleichzeitig als Einklemmschutz, indem er beim Schließen der Tankklappe 12 die Stromzufuhr zum Stellmotor 14 nicht nur bei vollständig geschlossener Tankklappe12, d.h. bei ihrem Anschlagen gegen die Dichtung 22 unterbricht, sondern auch dann, wenn sich ein Hindernis, wie beispielsweise ein Finger oder die Hand eines Benutzers zwischen der Dichtung 22 und der Innenseite der Tankklappe 12 befindet und die Tankklappe 12 gegen dieses Hindernis anschlägt und sich nicht mehr weiter schließen kann.

Alternativ oder zusätzlich kann auch der Mikroschalter 72 so ausgebildet sein, daß dem Stellmotor 14 Strom zugeführt wird, um die Tankklappe 12 zu schließen, wenn mit der Hand ein leichter Druck in Richtung Tankmulde 10 auf die geöffnete Tankklappe 12 ausgeübt und dadurch der Druck des Schwenkarms 40 auf den Schalter 72 entlastet wird. Der Mikroschalter 72 kann in diesem Fall ebenfalls zweckmäßig in den Stellmotor 14 integriert werden, wodurch zudem ebenso wie im Fall einer Integration des Schalters 36 der Aufwand für die Verkabelung reduziert werden kann.

## Patentansprüche

1. Tankklappeneinheit zum Einbau in ein Kraftfahrzeug, das einen durch einen Tankdeckel verschließbaren Kraftstoffeinfüllstutzen aufweist, wobei die Einheit einen Muldenkörper mit einer Durchtrittsöffnung für den Einfüllstutzen und eine schwenkbar am Muldenkörper angebrachte Tankklappe umfaßt, auf die ein Stellmotor einwirkt, der die Tankklappe zum Öffnen und Schließen von der Durchtrittsöffnung für den Einfüllstutzen weg bzw. auf sie zu verschwenkt. **dadurch gekennzeichnet, daß** der Stellmotor (14) einen Teil der vormontierten Tankklappeneinheit (2) bildet.

2. Tankklappeneinheit nach Anspruch 1, **dadurch gekennzeichnet, daß** der Stellmotor (14) als Gleichstrom-Elektromotor ausgebildet ist und beim Einbau der Tankklappeneinheit (2) an ein Bordnetz des Kraftfahrzeugs anschlieβbar ist.

3. Tankklappeneinheit nach Anspruch 2, **dadurch gekennzeichnet, daß** der Muldenkörper (8) ein Buchsen- oder Steckerteil (68; 70) eines Steckverbinders (66) trägt, geeignetum beim Einsetzen des Muldenkörpers (8) in eine Karosserieöffnung (4) des Kraftfahrzeugs mit einem in der Öffnung (4) angebrachten komplementären Steckeroder Buchsenteil (70, 68) des Steckverbinders (66) in Eingriff zu treten .

4. Tankklappeneinheit nach Anspruch 2 oder 3, **gekennzeichnet durch** einen auf dem Muldenkörper (8) angeordneten Bedienungsschalter (36) zum Schließen der Tankklappe (14) nach dem Betanken.

5. Tankklappeneinheit nach Anspruch 4, **dadurch gekennzeichnet, daß** der Schalter (36) hinter der geschlossenen Tankklappe (12) angeordnet ist und von der sich schließenden Tankklappe (12) betätigt wird, um den Schließvorgang zu beenden.

6. Tankklappeneinheit nach Anspruch 4 oder 5, **dadurch gekennzeichnet, daß** der Schalter (36) durch Druck von außen auf die geschlossene Tankklappe (12) betätigbar ist, um diese zu öffnen.

7. Tankklappeneinheit nach einem der Ansprüche 2 bis 6, **gekennzeichnet durch** einen Schalter (72) zum selbsttätigen Unterbrechen des Öffnungsvorgangs bei vollständig geöffneter Tankklappe (12).

8. Tankklappeneinheit nach Anspruch 7, **dadurch gekennzeichnet, daß** der Schalter (72) durch Druck auf die geöffnete Tankklappe (12) betätigbar ist, um diese zu schließen.

9. Tankklappeneinheit nach Anspruch 2 oder 3, **gekennzeichnet durch** einen Schalter (36) zum selbsttätigen Unterbrechen des Schließvorgangs bei vollständig geschlossener Tankklappe (12) oder beim Anschlagen der Tankklappe (12) gegen ein Hindernis.

10. Tankklappeneinheit nach einem der Ansprüche 4 bis 9**, dadurch gekennzeichnet, daß** der Schalter (36, 72) auf dem Muldenkörper (8) angeordnet oder in den Stellmotor (14) integriert ist.

11. Tankklappeneinheit nach einem der Ansprüche 1 bis 10, **dadurch gekennzeichnet, daß** der Stellmotor (14) und/oder der Schalter (36, 72) gekapselt sind.

12. Tankklappeneinheit nach einem der Ansprüche 1 bis 11, **dadurch gekennzeichnet, daß** der Stellmotor (14) und/oder Schließkontakte der Schalter (36, 72) auf der vom Einfüllstutzen (6) abgewandten Außenseite des Muldenkörpers (8) angeordnet sind.

13. Tankklappeneinheit nach Anspruch 12, **dadurch gekennzeichnet, daß** der Muldenkörper (8) dichtend gegen einen Rand einer Karosserieöffnung (4) des Kraftfahrzeugs und gegen den Einfüllstutzen (6) anlegbar ist.

14. Tankklappeneinheit nach einem der Ansprüche 1 bis 13, **dadurch gekennzeichnet, daß** der Stellmotor (14) in der Nähe eines Schwenkgelenks (28) der Tankklappe (12) angeordnet ist.

15. Tankklappeneinheit nach Anspruch 14, **dadurch gekennzeichnet, daß** der Stellmotor (14) auf einen über die Tankklappe (12) überstehenden Schwenkarm (40) einwirkt.

16. Tankklappeneinheit nach Anspruch 15, **dadurch gekennzeichnet, daß** der Stellmotor über ein Getriebe (30) auf den Schwenkarm (40) einwirkt.

17. Tankklappeneinheit nach Anspruch 16, **dadurch gekennzeichnet, daß** das Getriebe ein selbstsperrendes Schneckengetriebe (30) ist und ein Öffnen der Tankklappe (12) durch eine von außen darauf aufgebrachte Zugkraft verhindert.

18. Tankklappeneinheit nach einem der Ansprüche 1 bis 17, **dadurch gekennzeichnet, daß** sie von außen her in eine Karosserieöffnung (4) des Kraftfahrzeugs einsetzbar ist.

19. Kraftfahrzeug mit einer Tankklappeneinheit nach einem der vorangehenden Ansprüche.

## Claims

1. Tank flap unit for fitting into a motor vehicle which has a fuel filler neck which can be closed by a tank cover, the unit comprising a trough body with a passage opening for the filler neck and a tank flap which is attached pivotably to the trough body and on which a servomotor acts, the servomotor pivoting the tank flap away from the passage opening for the filler neck and towards it in order to open and close it, **characterized in that** the servomotor (14) forms part of the preassembled tank flap unit (2).

2. Tank flap unit according to Claim 1, **characterized in that** the servomotor (14) is designed as a D.C. electric motor and, when the tank flap unit (2) is fitted, can be connected to an electric system of the motor vehicle.

3. Tank flap unit according to Claim 2, **characterized in that** the trough body (8) bears a socket or plug part (68; 70) of a plug-and-socket connector (66) which is suitable, when the trough body (8) is inserted into a body opening (4) of the motor vehicle, to enter into engagement with a complementary plug or socket part (70, 68) of the plug-and-socket connector (66), which part is fitted in the opening (4).

4. Tank flap unit according to Claim 2 or 3, **characterized by** an operating switch (36) arranged on the trough body (8) for closing the tank flap (14) after refuelling.

5. Tank flap unit according to Claim 4, **characterized in that** the switch (36) is arranged behind the closed tank flap (12) and is actuated by the closing tank flap (12) in order to end the closing process.

6. Tank flap unit according to Claim 4 or 5, **characterized in that** the switch (36) can be actuated by pressure from the outside on the closed tank flap (12) in order to open the latter.

7. Tank flap unit according to one of Claims 2 to 6, **characterized by** a switch (72) for automatically interrupting the opening process when the tank flap (12) is completely open.

8. Tank flap unit according to Claim 7, **characterized in that** the switch (72) can be actuated by pressure on the open tank flap (12) in order to close the latter.

9. Tank flap unit according to Claim 2 or 3, **characterized by** a switch (36) for automatically interrupting the closing process when the tank flap (12) is completely closed or when the tank flap (12) strikes against an obstacle.

10. Tank flap unit according to one of Claims 4 to 9, **characterized in that** the switch (36, 72) is arranged on the trough body (8) or is integrated in the servomotor (14).

11. Tank flap unit according to one of Claims 1 to 10, **characterized in that** the servomotor (14) and/or the switch (36, 72) are encapsulated.

12. Tank flap unit according to one of Claims 1 to 11, **characterized in that** the servomotor (14) and/or closing contacts of the switches (36, 72) are arranged on the outside of the trough body (8) which faces away from the filler neck (6).

13. Tank flap unit according to Claim 12, **characterized in that** the trough body (8) can be placed in a sealing manner against an edge of a body opening (4) of the motor vehicle and against the filler neck (6).

14. Tank flap unit according to one of Claims 1 to 13, **characterized in that** the servomotor (14) is arranged in the vicinity of a pivoting joint (28) of the tank flap (12).

15. Tank flap unit according to Claim 14, **characterized in that** the servomotor (14) acts on a pivoting arm (40) which protrudes above the tank flap (12).

16. Tank flap unit according to Claim 15, **characterized in that** the servomotor acts on the pivoting arm (40) via a gear (30).

17. Tank flap unit according to Claim 16, **characterized in that** the gear is a self-locking worm gear (30) and prevents the tank flap (12) from being opened by a tensile force applied on it from the outside.

18. Tank flap unit according to one of Claims 1 to 17, **characterized in that** it can be inserted from the outside into a body opening (4) of the motor vehicle.

19. Motor vehicle having a tank flap unit according to one of the preceding claims.

## Revendications

1. Unité de trappe de réservoir d'essence destinée à être montée dans un véhicule automobile, qui présente une tubulure de remplissage de carburant pouvant être fermée par un bouchon de réservoir, l'unité comprenant un corps creux avec une ouverture de passage pour la tubulure de remplissage et une trappe de réservoir d'essence montée de manière à pouvoir pivoter sur le corps creux, sur laquelle agit un moteur de réglage qui fait pivoter la trappe de réservoir d'essence en vue de l'ouverture et de la fermeture de l'ouverture de passage pour la tubulure de remplissage à l'écart de celle-ci ou vers celle-ci, **caractérisée en ce que** le moteur de réglage (14) forme une partie de l'unité de trappe de réservoir prémontée (2).

2. Unité de trappe de réservoir d'essence selon la revendication 1, **caractérisée en ce que** le moteur de réglage (14) est réalisé sous forme d'un moteur électrique à courant continu et peut être raccordé à un réseau de bord du véhicule automobile lors de l'installation de l'unité de trappe de réservoir d'essence (2).

3. Unité de trappe de réservoir d'essence selon la revendication 2, **caractérisée en ce que** le corps creux (8) porte une partie formant douille ou fiche (68 ; 70) d'un connecteur à fiches (66), appropriée pour venir en prise avec une partie formant fiche ou douille (70, 68) complémentaire du connecteur à fiche (66) montée dans l'ouverture (4), lors de l'insertion du corps creux (8) dans une ouverture de la carrosserie (4) du véhicule automobile.

4. Unité de trappe de réservoir d'essence selon la revendication 2 ou 3, **caractérisée par** un commutateur de commande (36) disposé sur le corps creux (8) pour la fermeture de la trappe de réservoir d'essence (14) après le remplissage.

5. Unité de trappe de réservoir d'essence selon la revendication 4, **caractérisée en ce que** le commutateur (36) est disposé derrière la trappe de réservoir d'essence fermée (12) et est actionné par la trappe de réservoir d'essence (12) se fermant, afin de terminer l'opération de fermeture.

6. Unité de trappe de réservoir d'essence selon la revendication 4 ou 5, **caractérisée en ce que** le commutateur (36) peut être actionné par une pression depuis l'extérieur sur la trappe de réservoir d'essence fermée (12) afin d'ouvrir cette dernière.

7. Unité de trappe de réservoir d'essence selon l'une quelconque des revendications 2 à 6, **caractérisée par** un commutateur (72) destiné à interrompre automatiquement l'opération d'ouverture lorsque la trappe de réservoir d'essence (12) est complètement ouverte.

8. Unité de trappe de réservoir d'essence selon la revendication 7, **caractérisée en ce que** le commutateur (72) peut être actionné par une pression sur la trappe de réservoir d'essence ouverte (12) afin de fermer cette dernière.

9. Unité de trappe de réservoir d'essence selon la revendication 2 ou 3, **caractérisée par** un commutateur (36) pour l'interruption automatique de l'opération de fermeture lorsque la trappe de réservoir d'essence (12) est complètement fermée ou lorsque la trappe de réservoir d'essence (12) vient frapper contre un obstacle.

10. Unité de trappe de réservoir d'essence selon l'une quelconque des revendications 4 à 9, **caractérisée en ce que** le commutateur (36, 72) est disposé sur le corps creux (8) ou est intégré dans le moteur de réglage (14).

11. Unité de trappe de réservoir d'essence selon l'une quelconque des revendications 1 à 10, **caractérisée en ce que** le moteur de réglage (14) et/ou le commutateur (36, 72) sont blindés.

12. Unité de trappe de réservoir d'essence selon l'une quelconque des revendications 1 à 11, **caractérisée en ce que** le moteur de réglage (14) et/ou les contacts de fermeture du commutateur (36, 72) sont disposés du côté extérieur du corps creux (8) opposé à la tubulure de remplissage (6).

13. Unité de trappe de réservoir d'essence selon la revendication 12, **caractérisée en ce que** le corps creux (8) peut être appliqué hermétiquement contre un bord d'une ouverture de la carrosserie (4) du véhicule automobile et contre la tubulure de remplissage (6).

14. Unité de trappe de réservoir d'essence selon l'une quelconque des revendications 1 à 13, **caractérisée en ce que** le moteur de réglage (14) est disposé à proximité d'une articulation pivotante (28) de la trappe de réservoir d'essence (12).

15. Unité de trappe de réservoir d'essence selon la revendication 14, **caractérisée en ce que** le moteur de réglage (14) agit sur un bras pivotant (40) dépassant au-dessus de la trappe de réservoir d'essence (12).

16. Unité de trappe de réservoir d'essence selon la revendication 15, **caractérisée en ce que** le moteur de réglage agit par le biais d'un engrenage (30) sur le bras pivotant (40).

17. Unité de trappe de réservoir d'essence selon la revendication 16, **caractérisée en ce que** l'engrenage est un engrenage à vis sans fin autobloquant (30) et empêche une ouverture de la trappe de réservoir d'essence (12) par une force de traction appliquée de l'extérieur sur celle-ci.

18. Unité de trappe de réservoir d'essence selon l'une quelconque des revendications 1 à 17, **caractérisée en ce qu'**elle peut être utilisée depuis l'extérieur dans une ouverture de carrosserie (4) du véhicule automobile.

19. Véhicule automobile comprenant une unité de trappe de réservoir d'essence selon l'une quelconque des revendications précédentes.
